# EUROPEAN PATENT APPLICATION

(11) **EP 2 716 969 A2**
(43) Date of publication of application: **09.04.2014**
(21) Application number: 12789272.7
(22) Date of filing: 02.05.2012
(51) Int. Cl.: F23D 14/22, F23D 14/58, F23N 3/00

(54) **GAS BURNER SYSTEM**

(30) Priority: 23.05.2011 KR 20110048240
(71) Applicant: Kyungdong Navien Co., Ltd., Gyeonggi-do 450-818 (KR)
(72) Inventor: MIN, Tae Sik, Seoul 156-070 (KR)
(74) Representative: Habermann, Hruschka & Schnabel
(86) International application number: PCT/KR2012/003416
(87) International publication number: WO 2012/161428

(57) **Abstract**

A gas burner system is capable of improving combustion stability of a burner regardless of a flame temperature. The gas burner system for a gas boiler or a water heater is equipped with a burner carrying out combustion on a mixed fluid of air supplied from a fan and a combustion gas, and a combustion chamber in which the combustion is carried out by the burner. The burner is constituted of a plurality of individual burners. The plurality of individual burners are divided into two or more groups. Channels along which the mixed fluid of the air supplied from the fan and the gas is supplied to each burner group are formed independently of each other, and the mixed fluid of the air and the gas supplied to each burner group is individually adjusted in supply amount.

## Description

### BACKGROUND

### 1. Field of the Invention

The present invention relates, in general, to a gas burner system used for a boiler or a water heater, and more particularly, to a gas burner system in which a gas burner is formed into a plurality of divided burner groups, and a channel of a mixed fluid of air and gas supplied to each burner group is independently formed, so that the gas burner having various combustion modes can be realized, and in which the mixed fluid is supplied to the gas burner via a sidewall of a combustion chamber, so that a cooling structure of the combustion chamber can be simplified.

### 2. Discussion of Related Art

In general, gas boilers or water heaters are heating apparatuses that heat water using combustion heat generated in the process of burning a mixed fluid of gas and air, and circulate the heated water along piping, thereby allowing the heated water to be used for indoor heating or hot water.

Gas burners provided for the gas boilers or the water heaters are classified according to a combustion mode.

Combustion modes includes a diffusion combustion mode in which gas and air are separately supplied to the burner, a premixed combustion mode in which gas and air are previously mixed and the mixed fluid is supplied to the burner, and a partially premixed combustion mode in which the diffusion combustion mode and the premixed combustion mode are mixed.

A totally aerated burner of the premixed combustion mode is a burner to which the gas and the air are supplied at a constant mixture ratio, and has an advantage in that a high load can be obtained with a small volume, and an amount of generation of pollutants such as CO and NOx is small, and a disadvantage in that it is difficult to control because of a narrow range of an air percentage at which stable combustion is carried out.

The partially premixed combustion mode refers to a combustion mode used in a Bunsen burner. The Bunsen burner induces complete combustion by previously mixing fuel and primary air that is a part of supplied air, supplying the mixture to flame holes of the burner, and supplying secondary air to the flame holes independently of the mixture.

The diffusion combustion mode is excellent in flame stability, but generates a large quantity of pollutants such as CO and NOx. In the case of a premixed burner, a small quantity of pollutants such as CO and NOx are generated, but backfire may be generated when the combustion occurs on a low load region. When a load is increased, a flow speed of the mixed gas is increased, and a flame flares and causes instability.

The Bunsen burner employs advantages of the diffusion combustion mode and the premixed combustion mode. The Bunsen burner can promote flame stability while reducing emission of the pollutants, but has a disadvantage in that heat efficiency is low.

Meanwhile, there is a lean-rich burner in which a structure of the Bunsen burner is changed. The lean-rich burner has a flame section for air rich combustion at one side thereof and another flame section for gas rich combustion at the other side thereof. Mixed gases emitted from the two flame sections participate in their own combustion. Thereby, stable high-load combustion is possible with a burner having a small volume, and an amount of the emitted pollutants can be reduced.

However, typical lean-rich burners have a dual gas tube structure made up of a gas tube into which an air rich mixture flows and another gas tube into which a gas rich mixture flows. As such, the structure is complicated, and a manufacturing cost is increased.

As described above, the gas burner for the conventional gas boiler or the conventional water heater is restricted by its function to be operated only in one of the combustion modes, and thus has a problem that a burner system cannot be operated in a mode suitable for a combustion load.

Furthermore, the gas boiler or the water heater is provided with a combustion chamber cooler in order to prevent heat energy generated in a combustion chamber from causing heat damage to components around the combustion chamber when the heat energy is transmitted outside the combustion chamber. As the conventional combustion chamber cooler, a dry combustion chamber cooler in which a heat insulator is attached to an inner wall of the combustion chamber and a wet combustion chamber cooler in which heating water piping is wound around an outer wall of the combustion chamber have been known. Here, the dry combustion chamber cooler has low heat efficiency, and the wet combustion chamber cooler has a complicated structure that cannot be easily manufactured.

### SUMMARY OF THE INVENTION

The present invention is directed to a gas burner system that enables various combustion modes of a gas burner to be selectively operated so as to be suitable for a level of a combustion load using one burner system, thereby improving combustion stability of a burner regardless of a flame temperature according to the level of the combustion load.

The present invention is also directed to a gas burner system capable of simplifying a cooling structure of a combustion chamber, effectively preventing overheating of the combustion chamber, and improving heat efficiency of a boiler.

According to an aspect of the present invention, there is provided a gas burner system for a gas boiler or a water heater is equipped with a burner carrying out combustion on a mixed fluid of air supplied from a fan and a combustion gas, and a combustion chamber in which the combustion is carried out by the burner. The burner is constituted of a plurality of individual burners. The plurality of individual burners are divided into two or more groups. Channels along which the mixed fluid of the air supplied from the fan and the gas is supplied to each burner group are formed independently of each other, and the mixed fluid of the air and the gas supplied to each burner group is individually adjusted in supply amount.

Here, the gas supplied to each burner group may have a constant concentration. In this case, a totally aerated burner can be realized.

Further, the gas may not be supplied to a part of the burner groups and be supplied to the remaining part of the burner groups. In this case, a Bunsen burner can be realized.

Further, the burner groups may be divided into a first burner group and a second burner group. The individual burners constituting the first burner groups and the individual burners constituting the second burner group may be alternately disposed in the combustion chamber. One of the first burner group and the second burner group may be relatively rich in concentration of the gas, and the other burner group may be relatively lean in concentration of the gas. In this case, a lean-rich burner can be realized.

Further, the plurality of burner groups may be supplied with the air from one fan.

Alternatively, the plurality of burner groups may be individually supplied with the air from respective fans.

Further, the burner groups may be divided into a first burner group and a second burner group, and the individual burners constituting the first burner groups and the individual burners constituting the second burner group may be alternately disposed in the combustion chamber. In addition, the gas burner system may includes: a combustion chamber lower plate that communicates with an outlet of the fan; a channel cutoff member that is disposed away from the combustion chamber lower plate and partitions a channel of the air supplied from the fan and the gas into four sub-channels for front, rear, and both lateral sides of the combustion chamber; a combustion chamber body that is located on an upper side of the channel cutoff member and has a dual wall of an outer wall and an inner wall; first and second channel guides that are provided at front and rear sides of the channel cutoff member and form channels along which the fluid supplied from the fan to a space between the combustion chamber lower plate and the channel cutoff member passes through a space between the outer wall and the inner wall located at front and rear sides of the combustion chamber body, and then is supplied to the first burner group; and a third channel guide that is installed so as to partition a space between the channel cutoff member and the combustion chamber body into upper and lower spaces and forms a channel along which the fluid supplied from the fan passes through the space between the outer wall and the inner wall located at both lateral sides of the combustion chamber and then is supplied to the second burner group.

Further, the combustion chamber lower plate may include a first fan connection port through which the air supplied from the fan is supplied to the space between the combustion chamber lower plate and the channel cutoff member, and a second fan connection port through which the air supplied from the fan is supplied to the space between the channel cutoff member and the third channel guide. The first and second fan connection ports may be connected to first and second gas connection ports.

Further, the fluid flowing into the space between the combustion chamber lower plate and the channel cutoff member through the first fan connection port may flow into a space between the outer wall of the combustion chamber body and the first channel guide and a space between the outer wall of the combustion chamber body and the second channel guide through first and second vents vertically penetrating the front and rear sides of the channel cutoff member, and may be prevented from moving to both lateral sides by a sidewall of the channel cutoff member. The fluid flowing into the space between the combustion chamber lower plate and the third channel guide through the second fan connection port may move to both lateral sides of the channel cutoff member, flow into a space between the outer wall of the combustion chamber body and the third channel guide, and be prevented from moving to front and rear sides by the first channel guide and the second channel guide.

Further, the first and second channel guides may include first vertical sections that interrupt forward/backward movement of the fluid flowing into the space between the channel cutoff member and the third channel guide through the second fan connection port and have through-holes through which the fluid flows toward the first burner group and which are formed at regular intervals, horizontal sections that extend outward from lower ends of the first vertical sections and are placed on the channel cutoff member, and second vertical sections that extend upward from outer ends of the horizontal sections and are disposed between the outer wall and the inner wall of the combustion chamber body. The third channel guide may include a horizontal section that partitions a space between a bottom of the combustion chamber body and the channel cutoff member into upper and lower spaces, and vertical sections that extend upward from opposite ends of the horizontal section and are disposed between the outer wall and the inner wall of the combustion chamber body.

Further, the combustion chamber body may include first and second support plates provided at front and rear sides of the bottom of the combustion chamber body so that first purifiers to which the individual burners constituting the first burner group are coupled and which have through-holes formed in upper end faces thereof and second purifiers to which the individual burners constituting the second burner group are coupled and which have through-holes formed in lower end faces thereof are placed on the bottom of the combustion chamber body, and a plurality of partitions disposed between the first and second support plates at regular intervals. The fluid supplied through the first fan connection port may flow into the first purifiers through the through-holes formed in the first and second channel guides and through-holes formed in the first and second support plates, and be supplied to the first burner group through the through-holes formed in the upper end faces of the first purifiers, and the fluid supplied through the second fan connection port may flow into the second purifiers through the through-holes formed in the bottom of the combustion chamber body and the through-holes formed in the lower end faces of the second purifiers, and be supplied to the second burner group.

In addition, an upper end of each of the individual burners constituting the first burner group may have first flame holes inclined to opposite sides with respect to a vertical direction, and an upper end of each of the individual burners constituting the second burner group may have second flame holes formed in the vertical direction.

In the gas burner system according to the present invention, the gas burner is formed by a plurality of divided burner groups, and channels along which the mixed fluid of the air and the gas is supplied to the respective burner groups are independently formed. A mixture ratio of the air and the gas supplied to each burner group is adjusted to selectively operate a combustion mode suitable for a level of a combustion load. Thereby, it is possible to improve combustion stability of the gas burner.

Further, according to the present invention, a cooling channel of the combustion chamber is formed so that the mixed fluid of the air and the gas passes through the sidewall of the combustion chamber and is then supplied to the burner. Thereby, it is possible to simplify a cooling structure of the combustion chamber.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a geometrical perspective view showing a gas boiler equipped with a gas burner system according to an embodiment of the present invention;
FIG. 2 is an exploded perspective view of the gas boiler of FIG. 1;
FIGS. 3 to 6 are views showing a constitution of a combustion chamber lower plate in the gas burner system according to the embodiment of the present invention;
FIGS. 7 to 10 are views showing a constitution of a channel cutoff member in the gas burner system according to the embodiment of the present invention;
FIGS. 11 to 18 are views showing a constitution of a combustion chamber body in the gas burner system according to the embodiment of the present invention;
FIGS. 19 and 20 are views showing constitutions of a purifier and a burner in the gas burner system according to the embodiment of the present invention;
FIG. 21 is a geometrical perspective view showing the gas burner system according to the embodiment of the present invention;
FIG. 22 is a cross-sectional view taken along line A-A of FIG. 21;
FIG. 23 is a cross-sectional view taken along line B-B of FIG. 21; and
FIG. 24 is a geometrical perspective view showing a gas boiler equipped with a gas burner system according to another embodiment of the present invention.

### ** Reference Numerals **

100,100a: fan 200: combustion chamber lower plate
210: plate section 211: first fan connection hole
212: second fan connection hole 213: partition
220: fan connection port
221: first fan connection port
222: second fan connection port
231: first gas connection port
232: second gas connection port
300: channel cutoff member
310: plate section 320: sidewall
330: flange section 340: second fan connection port
350: first vent 360: second vent
370: first channel guide seating groove
380: second channel guide seating groove
410: first channel guide
411,421: first vertical sections
412,422: horizontal sections
413,423: second vertical sections
420: second channel guide 430: third channel guide 500: combustion chamber body
510: combustion chamber sidewall
510a: outer wall 510b: inner wall
510c: first channel guide mount
510d: second channel guide mount
511: front insulator seat
512: rear insulator seat
513,514: lateral insulator seats
515: flange section
520: partition 530: first support plate
531: through-hole 540: second support plate
541: through-hole 550: first purifier seat
560: second purifier seat 561: through-hole
571,572,573,574: insulators 600: purifier
610: first purifier 611: through-hole
620: second purifier 621: through-hole
700: burner 710: first burner
711: first flame hole 720: second burner
721: second flame hole 731,732: burner fixtures
750: connection plate
800: heat exchanger
900: duct

### DETAILED DESCRIPTION OF EXEMPLARY EMBODIMENTS

Exemplary embodiments of the present invention will be described in detail below with reference to the accompanying drawings. While the present invention is shown and described in connection with exemplary embodiments thereof, it will be apparent to those skilled in the art that various modifications can be made without departing from the spirit and scope of the invention.

A gas burner system according to the present invention is characterized in that: a burner provided for a gas boiler or a water heater is constituted of a plurality of individual burners; the plurality of individual burners are divided into two or more groups; channels along which the mixed fluid of the air supplied from the fan and the gas is supplied to each burner group are formed independently of each other; and the mixed fluid of the air and the gas supplied to each burner group is individually adjusted in supply amount. Thereby, it is possible to realize various combustion modes suitable for various combustion loads using a single gas burner system.

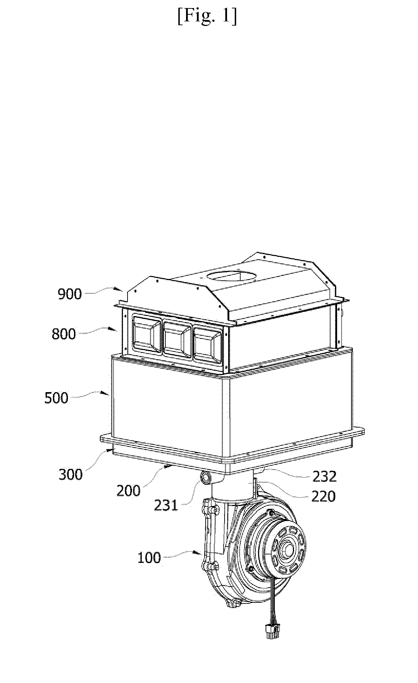

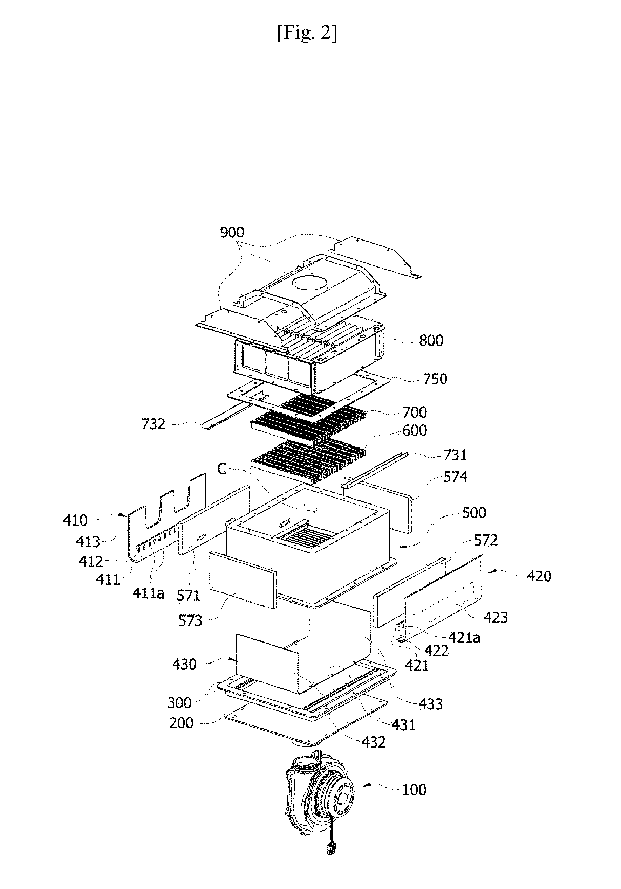

FIG. 1 is a geometrical perspective view showing a gas boiler equipped with a gas burner system according to an embodiment of the present invention, and FIG. 2 is an exploded perspective view of the gas boiler of FIG. 1.

A gas boiler equipped with a gas burner system according to an embodiment of the present invention includes a fan 100 that supplies combustion air, a combustion chamber lower plate 200 that communicates with an outlet of the fan 100, a channel cutoff member 300 that is disposed away from the combustion chamber lower plate 200 and partitions a channel of a mixed fluid of the air supplied from the fan 100 and a gas into four sub-channels for front, rear, and both lateral sides of a combustion chamber C, first and second channel guides 410 and 420 that are provided at front and rear sides of the channel cutoff member 300 and form channels for the mixed fluid of the air and the gas supplied from the fan 100 toward the front and rear sides of the combustion chamber C, a third channel guide 430 that is installed so as to enclose lower and lateral sides of the combustion chamber C and forms a channel for the mixed fluid of the air and the gas supplied from the fan 100 toward the lateral sides of the combustion chamber C, a combustion chamber body 500 that is located on an upper side of the channel cutoff member 300, houses a purifier 600 and a burner 700 constituted of a plurality of groups, and has the combustion chamber C formed therein, a heat exchanger 800 that is coupled to an upper side of the combustion chamber body 500 via a connection plate 750 and performs heat exchange between combustion heat generated from the combustion chamber C and heating water, and a duct 900 that is coupled to an upper side of the heat exchanger 800 and discharges an exhaust gas after the heat exchange.

Hereinafter, constitutions and coupling relations of individual components constituting the present invention will be described on the basis of a structure in which the mixed fluid of the air and the combustion gas is supplied from the fan 100 to the burner 700 in the gas boiler constituted as described above.

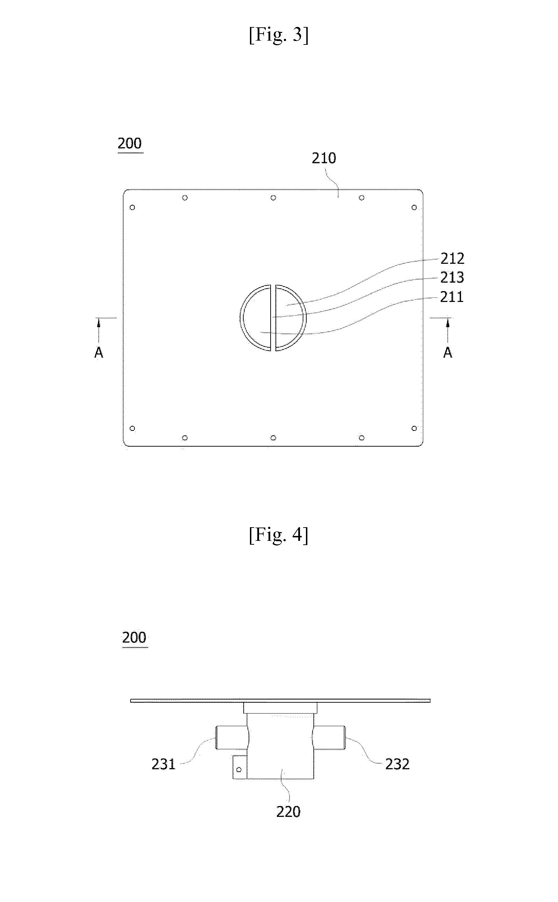

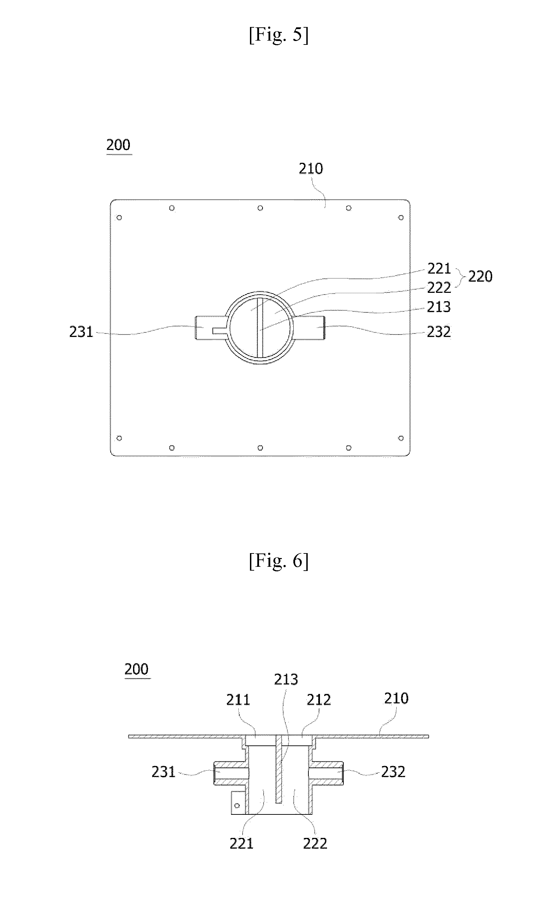

FIGS. 3 to 6 are views showing a constitution of a combustion chamber lower plate in the gas burner system according to the embodiment of the present invention, wherein FIG. 3 is a plan view, FIG. 4 is a front view, FIG. 5 is a bottom view, and FIG. 6 is a cross-sectional view taken along line A-A of FIG. 3.

The gas burner system according to the embodiment of the present invention is adapted to divide and supply the air from the single fan 100 to a plurality of groups of burners constituting the burner 700. The combustion chamber lower plate 200 communicating with the outlet of the fan 100 includes a plate section 210 which has a flat panel shape and in the center of which first and second fan connection holes 211 and 212 that are mirror symmetric and have a semi-circle shape are formed with a partition 213 disposed therebetween, first and second fan connection ports 221 and 222 that extend from a bottom of the plate section 210 so as to communicate with the first and second fan connection holes 211 and 212 and communicate with the outlet of the fan 100, a first gas connection port 231 that is connected to one side of the first fan connection port 221, and a second gas connection port 232 that is connected to one side of the second fan connection port 222.

Thus, when the air is supplied from the fan 100 to the first and second fan connection ports 221 and 222, the air is divided into two flows, and the two air flows are mixed with combustion gases that are supplied through the first and second gas connection ports 231 and 232 with a supply amount adjusted individually, and are transferred upward through the first and second fan connection holes 211 and 212.

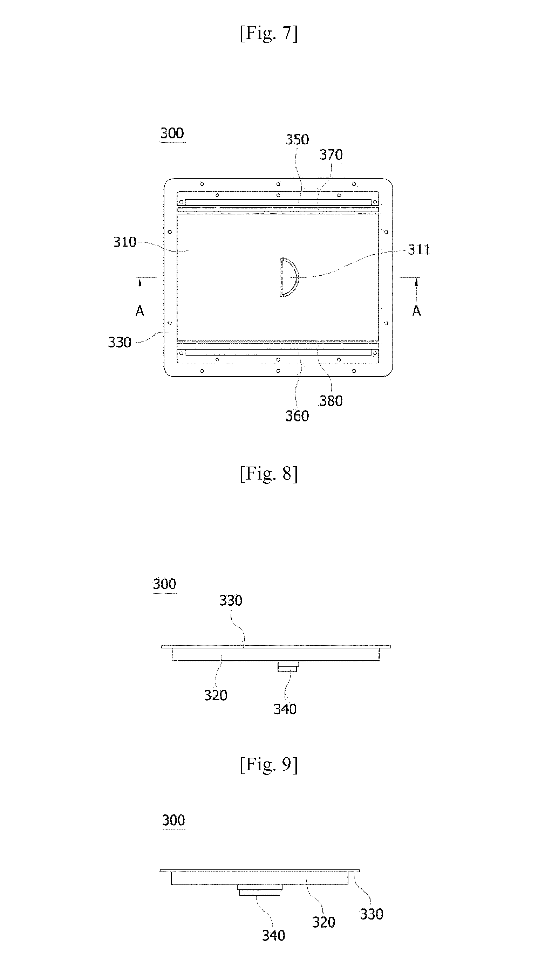

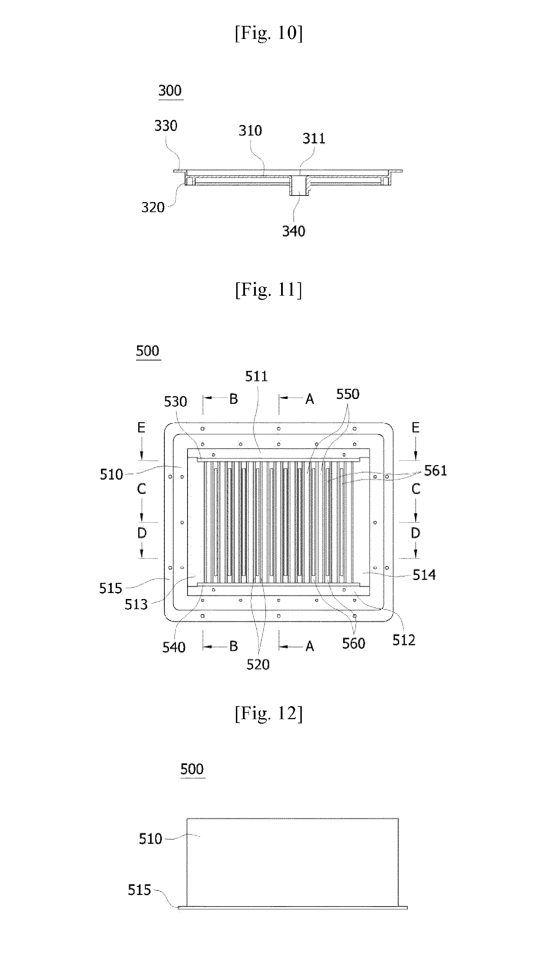

FIGS. 7 to 10 are views showing a constitution of a channel cutoff member in the gas burner system according to the embodiment of the present invention, wherein FIG. 7 is a plan view, FIG. 8 is a front view, FIG. 9 is a right side view, and FIG. 10 is a cross-sectional view taken along line A-A of FIG. 7.

The channel cutoff member 300 coupled to an upper side of the combustion chamber lower plate 200 includes a plate section 310 that is disposed in parallel with and upper the plate section 210 of the combustion chamber lower plate 200 and has a second fan connection hole 311 formed in the center thereof in a semi-circle shape so as to vertically correspond to the second fan connection hole 212 of the combustion chamber lower plate 200, a sidewall 320 that is coupled to an outer circumference of the plate section 310, a flange section 330 that extends outward from an upper end of the sidewall 320, and a second fan connection port 340 that extends downward from an edge of the second fan connection hole 311 and is inserted into the second fan connection hole 212 of the combustion chamber lower plate 200.

Front and rear edges of the plate section 310 are provided with first and second vents 350 and 360 opened vertically. A rear side of the first vent 350 is provided with a first channel guide seating groove 370 in which the first channel guide 410 is placed, and a front side of the second vent 360 is provided with a second channel guide seating groove 380 in which the second channel guide 420 is placed.

Therefore, when the channel cutoff member 300 is coupled to the upper side of the combustion chamber lower plate 200, a vertically separated space is formed between the plate section 210 of the combustion chamber lower plate 200 and the plate section 310 of the channel cutoff member 300 by the sidewall 320.

The mixed fluid supplied from the fan 100 through the first fan connection port 221 of the combustion chamber lower plate 200 flows through the first fan connection hole 211 of the combustion chamber lower plate 200 into the space between the combustion chamber lower plate 200 and the channel cutoff member 300. The mixed fluid supplied from the fan 100 through the second fan connection port 222 of the combustion chamber lower plate 200 flows through the second fan connection port 340 of the channel cutoff member 300 and then the second fan connection hole 311 of the channel cutoff member 300 into the upper side of the plate section 310 of the channel cutoff member 300.

Thus, the mixed fluid flows supplied through the first and second fan connection ports 221 and 222 of the fan connection port 220 are distributed into upper and lower flows on the basis of the plate section 310 of the channel cutoff member 300 by the coupling structure of the combustion chamber lower plate 200 and the channel cutoff member 300.

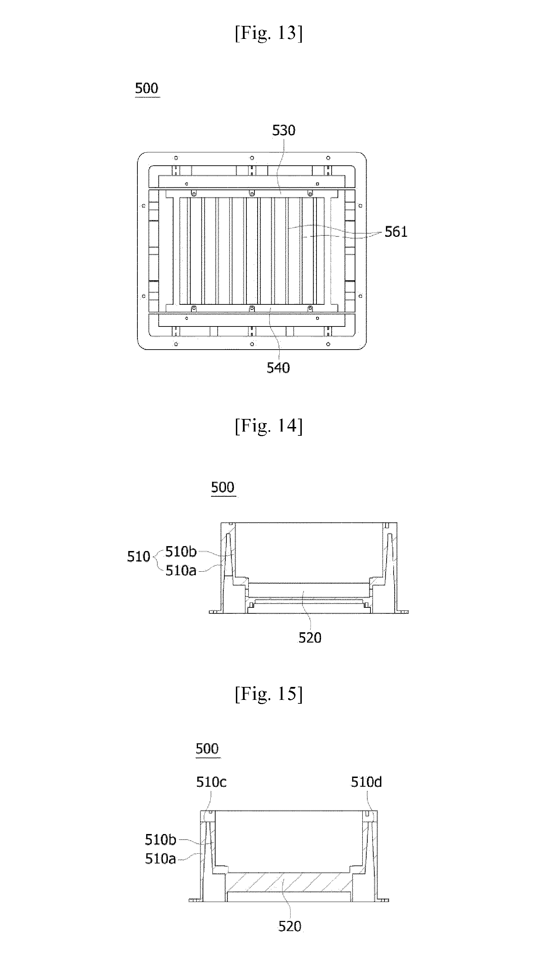

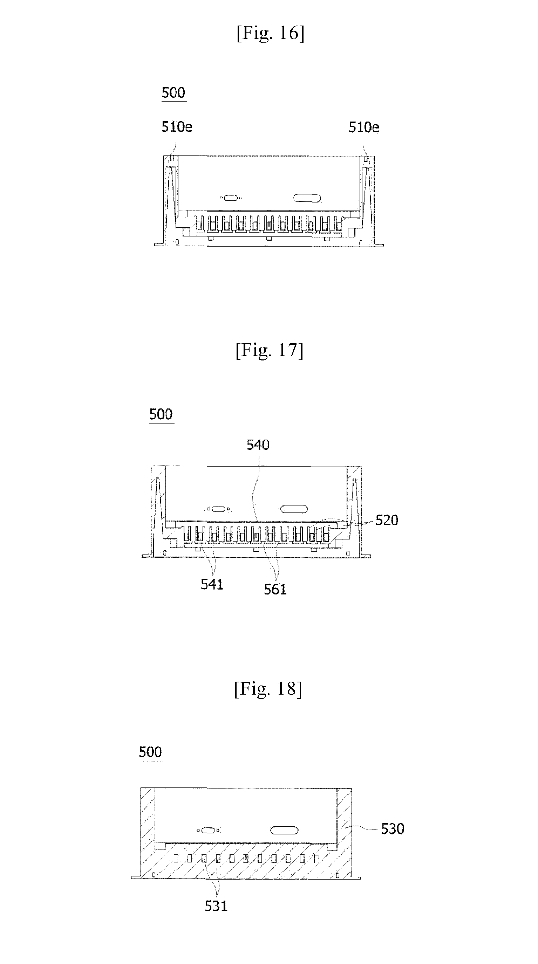

FIGS. 11 to 18 are views showing a constitution of a combustion chamber body in the gas burner system according to the embodiment of the present invention, wherein FIG. 11 is a plan view, FIG. 12 is a front view, FIG. 13 is a bottom view, FIG. 14 is a cross-sectional view taken along line A-A of FIG. 11, FIG. 15 is a cross-sectional view taken along line B-B of FIG. 11, FIG. 16 is a cross-sectional view taken along line C-C of FIG. 11, FIG. 17 is a cross-sectional view taken along line D-D of FIG. 11, and FIG. 18 is a cross-sectional view taken along line E-E of FIG. 11.

The combustion chamber body 500 coupled to the upper side of the channel cutoff member 300 has the combustion chamber C formed therein. A combustion chamber sidewall 510 has a dual wall structure made up of a combustion chamber outer wall 510a and a combustion chamber inner wall 510b disposed inside the combustion chamber outer wall 510a at a predetermined distance. Some regions between the outer wall 510a and the inner wall 510b are provided with, as shown in FIGS. 15 and 16, a first channel guide mount 510c, a second channel guide mount 510d, and a third channel guide mount 510e. When the first, second, and third channel guide mounts 510c, 510d, and 510e are placed on upper ends of the first, second, and third channel guides 410, 420, and 430, the mixed fluid flows through spaces opened at sides of each mount.

A flange section 515 extends outward from a lower end of the combustion chamber sidewall 510, and is fastened to the flange section 330 of the channel cutoff member 300.

A bottom of the combustion chamber body 500 is provided with front and rear insulator seats 511 and 512 at front and rear edges thereof on which front and rear insulators 571 and 572 are placed, and lateral insulator seats 513 and 514 at both lateral edges thereof on which lateral insulators 573 and 574 are placed.

A first support plate 530 is installed on a rear side of the front insulator seat 511, and a second support plate 540 is installed on a front side of the rear insulator seat 512. A plurality of partitions 520 spaced at constant intervals in opposite lateral directions are coupled between the first support plate 530 and the second support plate 540. The first and second support plates 530 and 540 are provided with through-holes 531 and 541 so as to correspond to through-holes 411a and 421a formed in the first and second channel guides 410 and 420.

First purifier seats 550, each of which has a closed bottom, and second purifier seats 560, each of which is provided with through-holes 561 in a bottom thereof, are alternately formed between the partitions 520. First purifiers 610 and individual burners constituting the group of first burners 710 are placed on the first purifier seats 550, and second purifiers 620 and individual burners constituting the group of second burners 720 are placed on the second purifier seats 560.

The first and second channel guides 410 and 420 provided at the front and rear sides of the combustion chamber body 500 are symmetric with respect to each other as shown in FIG. 2, and are made up of first vertical sections 411 and 421 that interrupt forward/backward movement of the fluid flowing into the space between the channel cutoff member 300 and the third channel guide 430 through the second fan connection port 222 and have through-holes 411a and 421a through which the fluid flows toward the group of first burners 710, horizontal sections 412 and 422 that extend outward from lower ends of the first vertical sections 411 and 421 and are placed on the channel cutoff member 300, and second vertical sections 413 and 423 that extend upward from outer ends of the horizontal sections 412 and 422 and are disposed between the outer wall 510a and the inner wall 510b of the combustion chamber body 500.

The third channel guide 430 provided to enclose the opposite lateral sides and lower side of the combustion chamber body 500 is made up of, as shown in FIG. 2, a horizontal section 431 that partitions a space between the bottom of the combustion chamber body 500 and the combustion chamber lower plate 200 into upper and lower spaces, and vertical sections 432 and 433 that extend upward from opposite ends of the horizontal section 431 and are disposed between the outer wall 510a and the inner wall 510b of the combustion chamber body 500.

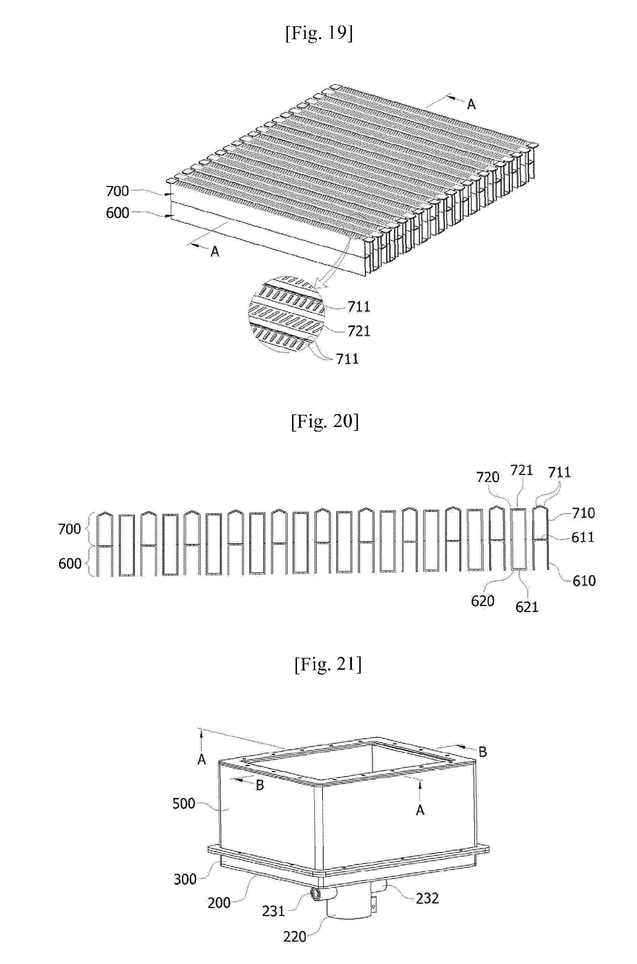

FIGS. 19 and 20 are views showing constitutions of a purifier and a burner in the gas burner system according to the embodiment of the present invention, wherein FIG. 19 is a perspective view showing how the purifier and the burner are coupled, and FIG. 20 is a cross-sectional view taken along line A-A of FIG. 19.

The purifier 600 inserted between the inner partitions 520 of the combustion chamber body 500 is made up of groups of first and second purifiers 610 and 620, and the burner 700 inserted between the inner partitions 520 of the combustion chamber body 500 is made up of the groups of first and second burners 710 and 720 coupled to upper sides of the groups of first and second purifiers 610 and 620. Front and rear upper ends of the burner 700 are fixed to the inner wall 510b of the combustion chamber body 500 by burner fixtures 731 and 732 shown in FIG. 2.

Each of the first purifiers 610 has a shape in which a lower portion thereof is open, and an upper end face thereof is provided with through-holes 611. Each of the first burners 710 coupled to the upper sides of the first purifiers 610 is configured so that a lower portion thereof is open, and an upper end thereof is provided with first flame holes 711 inclined to opposite sides with respect to a vertical direction.

The mixed fluid passing the front side of the combustion chamber body 500 through the through-holes 411a of the first channel guide 410 and the through-holes 531 of the first support plate 530 flows into one inner side of the first purifier 610. The mixed fluid passing the rear side of the combustion chamber body 500 through the through-holes 421a of the second channel guide 420 and the through-holes 541 of the second support plate 540 flows into the other inner side of the first purifier 610. To this end, the first purifiers 610 communicate with the space between the combustion chamber lower plate 200 and the channel cutoff member 300.

Each of the second purifiers 620 has a shape in which a lower end face thereof is provided with through-holes 621, and an upper portion thereof is open. Each of the second burners 720 coupled to the upper sides of the second purifiers 620 is configured so that a lower portion thereof is open, and an upper end thereof has second flame holes 721 formed in a vertical direction.

The mixed fluid passing the opposite lateral sides of the combustion chamber body 500 through the through-holes 561 formed in the bottom of the combustion chamber body 500 and the through-holes 621 formed in lower end faces of the second purifiers 620 flows into the second purifiers 620. To this end, the second purifiers 620 communicate with the space between the bottom of the combustion chamber body 500 and the third channel guide 430.

As described above, the burner 700 is constituted of the groups of first and second burners 710 and 720 that are alternately disposed, and is configured so that the mixed fluid is emitted through the first flame holes 711 formed in the upper ends of the first burners 710 in directions inclined with respect to the vertical direction, and the mixed fluid is emitted through the second flame holes 721 formed in the upper ends of the second burners 720 in the vertical direction. Thereby, it is possible to minimize lifting of the flame to improve stability of the flame.

Hereinafter, flow paths of the mixed fluid in the gas burner system having the coupling structure as described above will be described.

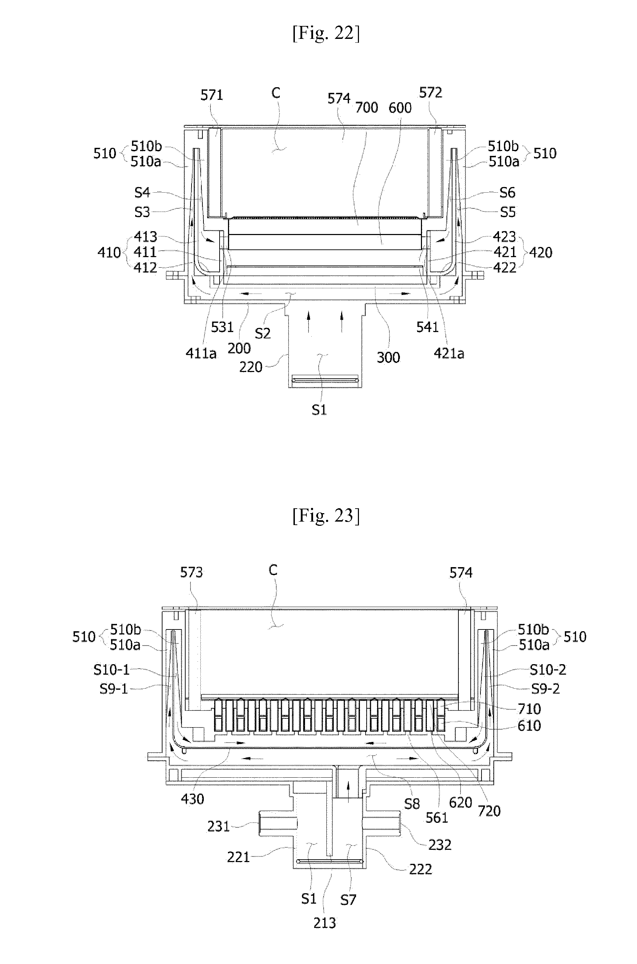

FIG. 21 is a geometrical perspective view showing the gas burner system according to the embodiment of the present invention. FIG. 22 is a cross-sectional view taken along line A-A of FIG. 21, and FIG. 23 is a cross-sectional view taken along line B-B of FIG. 21.

Referring to FIG. 22, the air supplied from the fan 100 to the first fan connection port 221 is mixed with the combustion gas supplied through the first gas connection port 231 in an inner space S1 of the first fan connection port 221. Then, the mixed fluid flows into a space S2 between the combustion chamber lower plate 200 and the channel cutoff member 300 located on an upper side of the space S1, and is divided to move to the front and rear sides of the combustion chamber C.

The mixed fluid moving to the front side of the combustion chamber C moves upward along a space S3 between the outer wall 510a of the combustion chamber body 500 and the first channel guide 410, undergoes turnabout of its flow when flowing through the upper end of the first channel guide 410, and moves downward along a space S4 between the first channel guide 410 and the inner wall 510b of the combustion chamber body 500. Then, the mixed fluid flows into the first purifiers 610 through the through-holes 411a of the first channel guide 410 and the through-holes 531 of the first support plate 530, passes through the through-holes 611 formed in the upper end faces of the first purifiers 610, and is supplied to the first burners 710 located on the first purifiers 610.

Simultaneously, the mixed fluid moving to the rear side of the combustion chamber C moves upward along a space S5 between the outer wall 510a of the combustion chamber body 500 and the second channel guide 420, undergoes turnabout of its flow when flowing through the upper end of the second channel guide 420, and moves downward along a space S6 between the second channel guide 420 and the inner wall 510b of the combustion chamber body 500. Then, the mixed fluid flows into the first purifiers 610 through the through-holes 421a of the second channel guide 420 and the through-holes 541 of the second support plate 540, passes through the through-holes 611 formed in the upper end faces of the first purifiers 610, and is supplied to the first burners 710 located on the first purifiers 610.

Referring to FIG. 23, the air supplied from the fan 100 to the second fan connection port 222 is mixed with the combustion gas supplied through the second gas connection port 232 in an inner space S7 of the second fan connection port 222. Then, the mixed fluid flows into a space S8 between the channel cutoff member 300 and the horizontal section 431 of the third channel guide 430 located on an upper side of the space S7, and is divided to move to the opposite lateral sides of the combustion chamber C.

The mixed fluid moves upward along spaces S9-1 and S9-2 between the outer wall 510a of the combustion chamber body 500 and the vertical sections 432 and 433 of the third channel guide 430, undergoes turnabout of its flow at the upper end of the third channel guide 430, and moves downward along spaces S10-1 and S10-2 between the vertical sections 432 and 433 of the third channel guide 430 and the inner wall 510b of the combustion chamber body 500. Then, the mixed fluid moves to a space S11 between the bottom of the combustion chamber body 500 and the horizontal section 431 of the third channel guide 430, flows into the second purifiers 620 through the through-holes 561 formed in the bottom of the combustion chamber body 500 and the through-holes 621 of the second purifiers 620, and is supplied to the second burners 720 located on the upper side of the second purifiers 620.

In the present invention as described above, the flow paths of the mixed fluid of the air supplied from the fan 100 and the combustion gas are independently set, so that the mixture ratio of the air and the gas of the mixed fluid supplied to the group of first burners 710 and the mixture ratio of the air and the gas of the mixed fluid supplied to the group of second burners 720 can be individually adjusted.

Therefore, when the combustion load is high, the mixture ratio of the air and the gas of the mixed fluid supplied to the group of first burners 710 and the mixture ratio of the air and the gas of the mixed fluid supplied to the group of second burners 720 are adjusted constantly. Thereby, it is possible to select a combustion mode of a totally aerated burner.

In contrast, when the combustion load is low, a premixed fluid is supplied to one of the group of first burners 710 and the group of second burners 720, and only air is supplied to the other group without supplying gas. In this way, a combustion mode of a Bunsen burner is selected, so that it is possible to secure stability of the flame.

Further, when the combustion load is relatively medium, an amount of supplied gas is individually adjusted so that rich combustion using a gas having a relatively high concentration is performed on one of the group of first burners 710 and the group of second burners 720, and lean combustion using a gas having a relatively low concentration is performed on the other group. Thereby, it is possible to select a combustion mode of a lean-rich burner.

Further, as described above, the channel of the mixed fluid is formed so that the mixed fluid cools the combustion chamber C while passing through the sidewall 510 of the combustion chamber body 500 and then is supplied to the burner 700. Thereby, it is possible to further simplify a cooling structure of the combustion chamber C, compared to that of the related art.

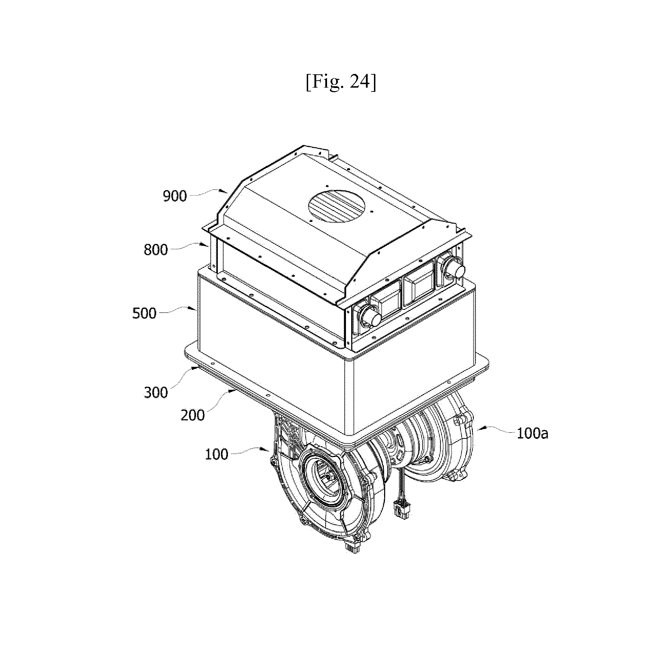

In the embodiment above, the case in which there is one fan 100 has been described as an example. However, in the present invention, as shown in FIG. 24, fans 100 and 100a supplying air to the groups of burners 710 and 720 may be separately provided so as to allow an amount of supplied air to be individually adjusted.

With this constitution, the air is adjusted in such a manner that, when the combustion load is low, only a part of each group of burners 710 and 720 is supplied with the mixed fluid, and the remaining part is supplied with neither the gas nor the air. Thereby, it is possible to save energy.

The case in which the burner 700 is made up of the two groups of burners 710 and 720 constituted of a plurality of individual burners has been described herein as an example. However, the number of burner groups is not limited thereto, and it is apparent that two or more burner groups may be provided.

It will be apparent to those skilled in the art that various modifications can be made to the above-described exemplary embodiments of the present invention without departing from the spirit or scope of the invention. Thus, it is intended that the present invention covers all such modifications provided they come within the scope of the appended claims and their equivalents.

## Claims

1. A gas burner system for a gas boiler or a water heater, which is equipped with a burner carrying out combustion on a mixed fluid of air supplied from a fan and a combustion gas, and a combustion chamber in which the combustion is carried out by the burner, wherein:
the burner is constituted of a plurality of individual burners;
the plurality of individual burners are divided into two or more groups;
channels along which the mixed fluid of the air supplied from the fan and the gas is supplied to each burner group are formed independently of each other, and the mixed fluid of the air and the gas supplied to each burner group is individually adjusted in supply amount.

2. The gas burner system of claim 1, wherein the gas supplied to each burner group has a constant concentration.

3. The gas burner system of claim 1, wherein the gas is not supplied to a part of the burner groups, and is supplied to the remaining part of the burner groups.

4. The gas burner system of claim 1, wherein
the burner groups are divided into a first burner group and a second burner group;
the individual burners constituting the first burner groups and the individual burners constituting the second burner group are alternately disposed in the combustion chamber; and
one of the first burner group and the second burner group is relatively rich in concentration of the gas, and the other burner group is relatively lean in concentration of the gas.

5. The gas burner system of claim 1, wherein the plurality of burner groups are supplied with the air from one fan.

6. The gas burner system of claim 1, wherein the plurality of burner groups are individually supplied with the air from respective fans.

7. The gas burner system of claim 1, wherein:
the burner groups are divided into a first burner group and a second burner group;
the individual burners constituting the first burner groups and the individual burners constituting the second burner group are alternately disposed in the combustion chamber; and
the gas burner system includes:
a combustion chamber lower plate that communicates with an outlet of the fan;
a channel cutoff member that is disposed away from the combustion chamber lower plate and partitions a channel of the air supplied from the fan and the gas into four sub-channels for front, rear, and both lateral sides of the combustion chamber;
a combustion chamber body that is located on an upper side of the channel cutoff member and has a dual wall of an outer wall and an inner wall;
first and second channel guides that are provided at front and rear sides of the channel cutoff member and form channels along which the fluid supplied from the fan to a space between the combustion chamber lower plate and the channel cutoff member passes through a space between the outer wall and the inner wall located at front and rear sides of the combustion chamber body, and then is supplied to the first burner group; and
a third channel guide that is installed so as to partition a space between the channel cutoff member and the combustion chamber body into upper and lower spaces and forms a channel along which the fluid supplied from the fan passes through the space between the outer wall and the inner wall located at both lateral sides of the combustion chamber and then is supplied to the second burner group.

8. The gas burner system of claim 7, wherein
the combustion chamber lower plate includes a first fan connection port through which the air supplied from the fan is supplied to the space between the combustion chamber lower plate and the channel cutoff member, and a second fan connection port through which the air supplied from the fan is supplied to the space between the channel cutoff member and the third channel guide; and
the first and second fan connection ports are connected to first and second gas connection ports.

9. The gas burner system of claim 8, wherein
the fluid flowing into the space between the combustion chamber lower plate and the channel cutoff member through the first fan connection port flows into a space between the outer wall of the combustion chamber body and the first channel guide and a space between the outer wall of the combustion chamber body and the second channel guide through first and second vents vertically penetrating the front and rear sides of the channel cutoff member, and is prevented from moving to both lateral sides by a sidewall of the channel cutoff member; and
the fluid flowing into the space between the combustion chamber lower plate and the third channel guide through the second fan connection port moves to both lateral sides of the channel cutoff member, flows into a space between the outer wall of the combustion chamber body and the third channel guide, and is prevented from moving to front and rear sides by the first channel guide and the second channel guide.

10. The gas burner system of claim 9, wherein
the first and second channel guides include first vertical sections that interrupt forward/backward movement of the fluid flowing into the space between the channel cutoff member and the third channel guide through the second fan connection port and have through-holes through which the fluid flows toward the first burner group and which are formed at regular intervals, horizontal sections that extend outward from lower ends of the first vertical sections and are placed on the channel cutoff member, and second vertical sections that extend upward from outer ends of the horizontal sections and are disposed between the outer wall and the inner wall of the combustion chamber body; and
the third channel guide includes a horizontal section that partitions a space between a bottom of the combustion chamber body and the channel cutoff member into upper and lower spaces, and vertical sections that extend upward from opposite ends of the horizontal section and are disposed between the outer wall and the inner wall of the combustion chamber body.

11. The gas burner system of claim 10, wherein
the combustion chamber body includes first and second support plates provided at front and rear sides of the bottom of the combustion chamber body so that first purifiers to which the individual burners constituting the first burner group are coupled and which have through-holes formed in upper end faces thereof and second purifiers to which the individual burners constituting the second burner group are coupled and which have through-holes formed in lower end faces thereof are placed on the bottom of the combustion chamber body, and a plurality of partitions disposed between the first and second support plates at regular intervals;
the fluid supplied through the first fan connection port flows into the first purifiers through the through-holes formed in the first and second channel guides and through-holes formed in the first and second support plates, and is supplied to the first burner group through the through-holes formed in the upper end faces of the first purifiers; and
the fluid supplied through the second fan connection port flows into the second purifiers through the through-holes formed in the bottom of the combustion chamber body and the through-holes formed in the lower end faces of the second purifiers, and is supplied to the second burner group.

12. The gas burner system of claim 11, wherein
an upper end of each of the individual burners constituting the first burner group has first flame holes inclined to opposite sides with respect to a vertical direction; and
an upper end of each of the individual burners constituting the second burner group has second flame holes formed in the vertical direction.
